# EUROPEAN PATENT APPLICATION

(11) **EP 3 885 723 A1**
(43) Date of publication of application: **29.09.2021**
(21) Application number: 20193882.6
(22) Date of filing: 01.09.2020
(51) Int. Cl.: G01J 1/02, G01J 1/04, G01J 1/42

(54) **IMAGER, USER EQUIPMENT, METHOD FOR ACQUIRING AMBIENT LIGHT, AND STORAGE MEDIUM**

(30) Priority: 27.03.2020 CN 202010231231
(71) Applicant: Beijing Xiaomi Mobile Software Co., Ltd., Beijing 100085 (CN)
(72) Inventor: ZHOU, Longlong, Beijing, 100085 (CN)
(74) Representative: Gevers Patents

(57) **Abstract**

An imager is installed under a display (2) having a first polarizer part (21). The imager includes at least one first light sensor element (11) and at least one second light sensor element (12). The imager further includes a second polarizer part (13) provided upstream of the second light sensor element (12) along a direction in which light is incident on the second light sensor element (12). Polarization orientation of the first polarizer part (21) is at a preset angle to polarization orientation of the second polarizer part (13). The first light sensor element (11) receives screen light emitted by the display and first polarized ambient light incident through the first polarizer part (21). The second light sensor element (12) receives the screen light emitted by the display (2) and second polarized ambient light incident through the first polarizer part (21) and the second polarizer part (13).

## Description

### TECHNICAL FIELD

The subject disclosure relates to the field of User Equipment (UE), and more particularly, to an imager, UE, a method for acquiring ambient light, and a storage medium.

### BACKGROUND

With progress of technology, UE such as a mobile phone is having an increasingly high screen ratio. A screen ratio becomes a major selling point of a mobile phone. A full-screen mobile phone gradually becomes a mainstream of a future mobile phone market.

Screen light tends to interference with a front camera of a mobile phone, making it hard to achieve a true screen ratio of 100% while acquiring a good photographing result. At present, various mobile phone manufacturers are trying actively to develop an off-screen camera. However, at present there is yet any satisfying solution that works for mass production.

### SUMMARY

In view of this, embodiments herein provide an imager, UE, a method for acquiring ambient light, and a storage medium.

According to an aspect herein, an imager is installed under a display having a first polarizer part. The imager includes at least one first light sensor element and at least one second light sensor element.

The imager further includes a second polarizer part. The second polarizer part is provided upstream of the at least one second light sensor element along a direction in which light is incident on the at least one second light sensor element. Polarization orientation of the first polarizer part is at a preset angle to polarization orientation of the second polarizer part.

The at least one first light sensor element receives screen light emitted by the display and first polarized ambient light incident through the first polarizer part. The at least one second light sensor element receives the screen light emitted by the display and second polarized ambient light incident through the first polarizer part and the second polarizer part.

With embodiments herein, a first polarizer part of a display is at a preset angle to a second polarizer part of an imager. Therefore, second polarized ambient light incident through the first polarizer part and the second polarizer part received by a second light sensor element of the imager includes only a small amount of ambient light, or no ambient light at all, facilitating subsequent elimination of impact of screen light on photographing.

The polarization orientation of the first polarizer part may be perpendicular to the polarization orientation of the second polarizer part. The at least one first light sensor element may receive the screen light emitted by the display and the first polarized ambient light incident through the first polarizer part. The at least one second light sensor element may receive the screen light emitted by the display.

The first polarizer part may include a first polarizer. The second polarizer part may include a second polarizer. The first polarizer may parallel the second polarizer.

In an installed state, the at least one first light sensor element and the at least one second light sensor element may be located coplanar in an installation plane. The installation plane may parallel the display. The at least one first light sensor element and the at least one second light sensor element may be provided side by side in the installation plane.

The imager may include a camera.

The second polarizer part may be glued to the at least one second light sensor element.

According to an aspect herein, User Equipment (UE) may include an aforementioned imager and the display. The UE may further include a processor. The processor may be electrically connected respectively to the at least one first light sensor element and the at least one second light sensor element of the imager.

The advantages and technical effects of the UE correspond to those of the imager presented before.

The UE may further include memory.

The memory may be adapted to storing an instruction executable by the processor.

The processor may be adapted to:
acquiring first light sensor data collected by at least one first light sensor element, the first light sensor data including a first electric signal, the first electric signal corresponding to screen light emitted by a display and first polarized ambient light incident through a first polarizer part of the display received by the at least one first light sensor element;
acquiring second light sensor data collected by at least one second light sensor element, the second light sensor data including a second electric signal, the second electric signal corresponding to the screen light emitted by the display, and second polarized ambient light incident through the first polarizer part of the display and a second polarizer part of an imager received by the at least one second light sensor element; and
acquiring, according to the second light sensor data and the first light sensor data, third light sensor data as an electric signal corresponding to ambient light.

According to an aspect herein, a method for acquiring ambient light may include:
acquiring first light sensor data collected by at least one first light sensor element, the first light sensor data including a first electric signal, the first electric signal corresponding to screen light emitted by a display and first polarized ambient light incident through a first polarizer part of the display received by the at least one first light sensor element;
acquiring second light sensor data collected by at least one second light sensor element, the second light sensor data including a second electric signal, the second electric signal corresponding to the screen light emitted by the display, and second polarized ambient light incident through the first polarizer part of the display and a second polarizer part of an imager received by the at least one second light sensor element; and
acquiring, according to the second light sensor data and the first light sensor data, third light sensor data as an electric signal corresponding to ambient light.

The advantages and technical effects of the method correspond to those of the imager presented before.

When polarization orientation of the first polarizer part is perpendicular to polarization orientation of the second polarizer part, the first light sensor data may include the first electric signal. The first electric signal may correspond to the screen light emitted by the display and the first polarized ambient light incident through the first polarizer part received by the at least one first light sensor element. The second light sensor data may include a fourth electric signal. The fourth electric signal may correspond to the screen light emitted by the display received by the at least one second light sensor element. The third light sensor data may include a fifth electric signal. The fifth electric signal may correspond to the first polarized ambient light incident through the first polarizer part.

In one particular embodiment, a method herein is determined by computer program instructions.

Consequently, according to an aspect herein, the subject disclosure is further directed to a computer program including instructions for executing the method herein, when said program is executed by a computer.

Said program can use any programming language and take the form of source code, object code or a code intermediate between source code and object code, such as a partially compiled form, or any other desirable form.

According to an aspect herein, a transitory or non-transitory computer-readable storage medium or recording medium has stored thereon instructions which, when executed by a processor of mobile UE, allow the mobile UE to implement the method for acquiring ambient light.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The above general description and detailed description below are but exemplary and explanatory, and do not limit the subject disclosure.

### BRIEF DESCRIPTION OF THE ACCOMPANYING DRAWINGS

Drawings here are incorporated in and constitute part of the subject disclosure, illustrate embodiments according to the subject disclosure, and together with the subject disclosure, serve to explain the principle of the subject disclosure.
FIG. 1 is a diagram of a display in related art according to an exemplary embodiment.
FIG. 2 is a diagram of an imager according to an exemplary embodiment.
FIG. 3 is a diagram of a principle of polarization according to an exemplary embodiment.
FIG. 4 is a diagram of an imager according to an exemplary embodiment.
FIG. 5 is a flowchart of a method for acquiring ambient light according to an exemplary embodiment.
FIG. 6 is a flowchart of a method for acquiring ambient light according to an exemplary embodiment.
FIG. 7 is a block diagram of a device for acquiring ambient light according to an exemplary embodiment.

### DETAILED DESCRIPTION

Exemplary embodiments (examples of which are illustrated in the accompanying drawings) are elaborated below. The following description refers to the accompanying drawings, in which identical or similar elements in two drawings are denoted by identical reference numerals unless indicated otherwise. Implementations set forth in the following exemplary embodiments do not represent all implementations in accordance with the subject disclosure. Rather, they are mere examples of the apparatus (i.e., device) and method in accordance with certain aspects of the subject disclosure as recited in the accompanying claims. The exemplary implementation modes may take on multiple forms, and should not be taken as being limited to examples illustrated herein. Instead, by providing such implementation modes, embodiments herein may become more comprehensive and complete, and comprehensive concept of the exemplary implementation modes may be delivered to those skilled in the art. Implementations set forth in the following exemplary embodiments do not represent all implementations in accordance with the subject disclosure. Rather, they are merely examples of the apparatus and method in accordance with certain aspects herein as recited in the accompanying claims.

A term used in an embodiment herein is merely for describing the embodiment instead of limiting the subject disclosure. A singular form "a" and "the" used in an embodiment herein and the appended claims may also be intended to include a plural form, unless clearly indicated otherwise by context. Further note that a term "and / or" used herein may refer to and contain any combination or all possible combinations of one or more associated listed items.

Note that although a term such as first, second, third may be adopted in an embodiment herein to describe various kinds of information, such information should not be limited to such a term. Such a term is merely for distinguishing information of the same type. For example, without departing from the scope of the embodiments herein, the first information may also be referred to as the second information. Similarly, the second information may also be referred to as the first information. Depending on the context, a "if" as used herein may be interpreted as "when" or "while" or "in response to determining that".

In addition, described characteristics, structures or features may be combined in one or more implementation modes in any proper manner. In the following descriptions, many details are provided to allow a full understanding of embodiments herein. However, those skilled in the art will know that the technical solutions of embodiments herein may be carried out without one or more of the details; alternatively, another method, component, device, option, etc., may be adopted. Under other conditions, no detail of a known structure, method, device, implementation, material or operation may be shown or described to avoid obscuring aspects of embodiments herein.

A block diagram shown in the accompanying drawings may be a functional entity which may not necessarily correspond to a physically or logically independent entity. Such a functional entity may be implemented in form of software, in one or more hardware modules or integrated circuits, or in different networks and /or processor devices and /or microcontroller devices.

In addition, a term such as "first", "second", etc., may serve but for description purposes and should not be construed as indication or implication of relevancy, or implication of a quantity of technical features under consideration. Accordingly, a feature with an attributive "first", "second", etc., may expressly or implicitly include at least one such feature. Herein by "multiple", it may mean two or more unless indicated otherwise expressly.

At present, a full screen becomes a major selling point of UE. A full-screen mobile phone becomes a mainstream of a mobile phone market. To achieve a true screen ratio of 100%, it is crucial to address impact of screen light emitted by a screen of a mobile phone on a photographing result acquired using an off-screen camera. According to a related research, a full screen may impact a photographing result of a front camera mainly in two aspects as follows. Firstly, the display may be of low transmittance. The off-screen camera may not be able to acquire enough natural light. Secondly, the display per se may emit light, rendering a photo by the off-screen camera whitish and blurry.

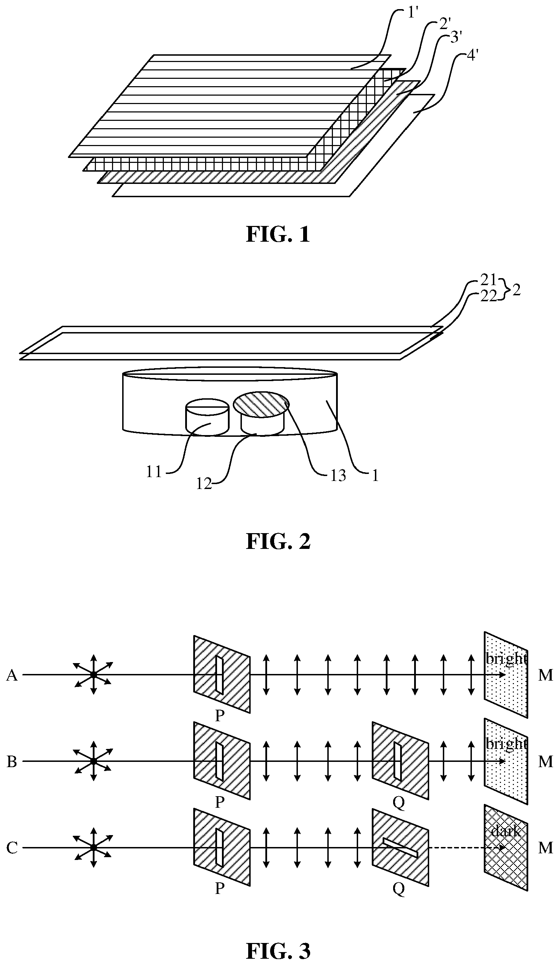

According to related art, transmittance of a display may be increased. A size of a light sensor element, an amount of light sensed, etc., may be increased. For example, an Organic Light-Emitting Diode (OLED) display of high transmittance may be used to ensure that an off-screen camera acquires enough natural light. Referring to FIG. 1, to prevent screen reflection when a user uses an OLED display, a first polarizer part 1' may be provided at a topmost layer of the OLED display (refer to orientation in FIG. 1). An Encap glass 2', an organic self-luminous layer 3', and a Thin Film Transistor (TFT) glass substrate 4' may be provided successively under the first polarizer part. Ambient natural light may pass through the first polarizer part 1' of the OLED display, and then may be incident into the off-screen camera.

According to related art, impact of screen light emitted by an OLED display per se on an off-screen camera may be eliminated by a software algorithm. On one hand, a simple algorithm may neither be robust nor of high computing efficiency, failing to efficiently eliminate impact of light emitted by the OLED display per se on the off-screen camera. On the other hand, an overly complex algorithm may lower a processing speed of a mobile phone. When an off-screen camera transmits a great amount of data, especially in case of a video call, an overly complex algorithm may increase system power consumption notably, rendering a mobile phone stuttering, worsening user experience.

Embodiments herein provide an imager, i.e., a device for collecting an image. The imager may be applicable to UE such as a mobile phone, a pad, etc. The imager, which for example may be a front camera of a mobile phone, is installed under a display having a first polarizer part. The imager includes at least one first light sensor element and at least one second light sensor element. The imager further includes a second polarizer part. The second polarizer part is provided upstream of the at least one second light sensor element along a direction in which light is incident on the at least one second light sensor element. Polarization orientation of the first polarizer part is at a preset angle to polarization orientation of the second polarizer part. The at least one first light sensor element receives screen light emitted by the display and first polarized ambient light incident through the first polarizer part. The at least one second light sensor element receives the screen light emitted by the display and second polarized ambient light incident through the first polarizer part and the second polarizer part. As the first polarizer part and the second polarizer part may be oriented at a preset angle such as of 85°, 90°, etc., to each other, there may be but a small amount of ambient natural light passing through the first polarizer part and the second polarizer part, or all natural light is filtered out. Therefore, it may be deemed that only screen light emitted by the display is received by the at least one second light sensor element, such that the screen light may be removed subsequently, leaving only ambient light.

Referring to FIG. 2, an imager may be a camera 1. The camera 1 may be provided under a display 2. The display 2 may be an OLED display, for example. The display 2 may include a first polarizer part 21 and an organic self-luminous layer 22. When a screen of UE is laid flat facing up, the first polarizer part 21 may be located above the organic self-luminous layer 22. The camera 1 may be provided under the organic self-luminous layer 22. The imager may include a first light sensor element 11 and a second light sensor element 12. The first light sensor element 11 and the second light sensor element 12 may be in same environment. Both light sensor elements may receive same light. The first light sensor element 11 and the second light sensor element 12 may convert, using a photoelectric conversion function of a photoelectric device, a light image on a photosensitive surface into an electric signal proportional to the light image. Compared to a photosensitive element of a "point" source such as a photodiode, a phototransistor, etc., a light sensor element is a functional device which may divide a light image on a light receiving surface of the light sensor element into a number of small units, and convert the light image into an available electric signal. The first light sensor element 11 and the second light sensor element 12 may be Charge-Coupled Devices (CCD), Complementary Metal Oxide Semiconductors (CMOS), etc., for example.

The camera 1 may further include a second polarizer part 13. The second polarizer part 13 may be provided upstream of the second light sensor element 12 along a direction in which light is incident on the second light sensor element 12. Referring to FIG. 2, that is, the second polarizer part 13 may be provided above the second light sensor element 12. Polarization orientation of the first polarizer part 21 may be at a preset angle to polarization orientation of the second polarizer part 13. The first light sensor element 11 may receive screen light emitted by the display and first polarized ambient light incident through the first polarizer part 21. The second light sensor element 12 may receive the screen light emitted by the display, and second polarized ambient light incident through the first polarizer part 21 and the second polarizer part 13. The first polarizer part 21 may be a first polarizer. The second polarizer part 13 may as well be a second polarizer. Polarization orientation of the first polarizer may be at a preset angle to polarization orientation of the second polarizer. The preset angle according to an exemplary embodiment herein is not limited. The preset angle may be provided such that the second light sensor element 12 may receive no natural light, and receive but the screen light. Alternatively, the second light sensor element 12 may receive all the screen light but just a small amount of natural light. A size of the preset angle may be selected as needed, so long as there is no impact on a photographing result of the camera 1.

A working principle of the first polarizer part 21 and the second polarizer part 13 herein may be illustrated for clear illustration of technical content and technical effect disclosed herein. Referring to FIG. 3, three beams of identical natural light A, B, C may pass through a polarizer P. Polarization orientation of the polarizer P may be vertical. The beam A may become first vertically polarized light vibrating along the vertical direction. Light may be received on a background plate M, which may then be bright. The beam B may pass through the polarizer P and a polarizer Q. Polarization orientation of the polarizer P and that of the polarizer Q may both be vertical. After passing through the polarizer P, the beam B may become the first vertically polarized light vibrating along the vertical direction. As the first vertically polarized light vibrates along the polarization orientation of the polarizer Q, the first vertically polarized light may pass through the polarizer Q and then become second vertically polarized light, light may still be received on the background plate M, which may then be bright. The beam C may pass through the polarizer P and a polarizer Q. The polarizer P may be oriented vertically. The polarizer Q may be placed horizontally, with horizontal polarization orientation. After passing through the polarizer P, the beam C may become the first vertically polarized light vibrating along the vertical direction. As the polarization orientation of the polarizer Q is horizontal, only a light wave vibrating horizontally may propagate through the polarizer Q. However, the first vertically polarized light vibrates vertically, and may not be able to pass through the polarizer Q. Therefore, the first vertically polarized light may be filtered out completely after passing through the polarizer Q. No light may be received on the background plate M. The background plate M may be dark. Referring to FIG. 2 and FIG. 3, the first polarizer part 21 may be the polarizer P. The second polarizer part 13 may be the polarizer Q. When the polarization orientation of the first polarizer part 21 is at an angle to the polarization orientation of the second polarizer part 13. After passing through the first polarizer part 21 and the second polarizer part 13 successively, only a negligible amount of ambient light may be received by the second light sensor element 12. Then, the first light sensor element 11 may receive the screen light emitted by the display 2 and first polarized ambient light incident through the first polarizer part 21. The second light sensor element 12 may receive the screen light emitted by the display 2, and second polarized ambient light incident through the first polarizer part 21 and the second polarizer part 13. However, the second polarized ambient light may be negligible. Therefore, light received by the second light sensor element 12 may be deemed nearly all screen light.

Receiving ambient light may facilitate improving the photographing result of the camera 1. However, screen light may render a picture taken by the camera 1 whitish, impacting the photographing result. Therefore, it may be desirable that the camera 1 receives ambient light instead of light emitted by the screen per se. As shown in FIG. 2, the first light sensor element 11 may receive screen light and first polarized ambient light. The second light sensor element 12 may receive the screen light and second polarized ambient light. However, the second polarized ambient light may be negligible. That is, light received by the second light sensor element 12 may be deemed all screen light. Accordingly, the screen light may be determined easily according to the screen light and the first polarized ambient light received by the first light sensor element 11 and the screen light received by the second light sensor element 12, thereby acquiring pure ambient light containing only the first polarized ambient light. Accordingly, a better picture may be taken by the camera 1.

Referring again to FIG. 2, the preset angle may be 90°. That is, the polarization orientation of the first polarizer part 21 may be perpendicular to the polarization orientation of the second polarizer part 13. Then, according to a principle shown in FIG. 3, the first light sensor element 11 may receive the screen light emitted by the display 2 and first polarized ambient light incident through the first polarizer part 21. As the first polarized ambient light vibrates perpendicular to the polarization orientation of the second polarizer part 13, the first polarized ambient light may not be able to propagate through the second polarizer part 13. The second light sensor element 12 may receive no ambient light, but only the screen light emitted by the display 2. Depending on a process, assembly, etc., the polarization orientations may not be completely perpendicular to each other, but have a certain deviation. Alternatively, the first polarizer part 21 and the second polarizer part 13 may somehow deviate when being assembled, etc. Any such condition may render a preset angle of other than 90°, fluctuating within a range such as 90° ± 5° . Accordingly, the second light sensor element 12 may receive a small amount of ambient light, as illustrated in an aforementioned embodiment. However, such a small amount of ambient light may be negligible. Note that the small amount of ambient light may be regulated via an algorithm stored in UE during subsequent photographing to eliminate impact of the small amount of ambient light on the photographing result. Regulation performed using the algorithm regulating may serve to produce a good picture acceptable to most users.

Usually, a screen may be of low transmittance, generally of around 3%. The camera 1 may be provided under the display 2. The camera 1 may receive light emitted by the display 2 per se directly at a short distance. Consequently, a light sensor element may receive much more screen light than ambient light received by the camera 1. However, it is the ambient light that is required for the camera 1 to form an image. The ambient light may tend to vary. In addition, a display may have to perform display in various scenes. There is no way to predict content to be displayed on a display. Any such uncertainty may increase difficulty in regulating the result of an image captured by the camera 1 using an algorithm. A massive amount of data may have to be processed, necessitating an extremely complex algorithm. A hardware structure of the camera 1 may be improved. Two light sensor elements may be provided. In addition, a second polarizer part 13 may be provided on one of the light sensor elements. The second polarizer part 13 may cooperate with the first polarizer part 21, such that the light sensor element provided with the second polarizer part 21 may receive only screen light and no ambient light, or receive only a negligible amount of ambient light. The other light sensor element may receive both ambient light and screen light. Accordingly, subsequently ambient light received by the camera 1 may be determined quickly and accurately, greatly lowering difficulty of an algorithm for processing an image during photographing, greatly improving a speed of subsequent image processing and precision therein.

Referring again to FIG. 2, the first polarizer part 21 may include a first polarizer. The second polarizer part 13 may include a second polarizer. The first polarizer may parallel the second polarizer. If the two polarizers do not parallel each other, there may be a great deviation in a preset angle between the polarization orientation of the first polarizer part 21 and the polarization orientation of the second polarizer part 13. Consequently, the second light sensor element 12 may receive too much ambient light, rendering an image captured by the camera 1 poor. In addition, to ensure accuracy and reliability of data collected by the two light sensor elements and facilitate subsequent algorithm processing, the first light sensor element 11 and the second light sensor element 12 may be of identical structures, functions, performance, etc. That is, it is preferred that any parameter of the first light sensor element 11 and that of the second light sensor element 12 are identical. For example, the two light sensor elements may be of the same model, manufactured by the same manufacturer in the same batch, have the same memory, have the same light sensing performance, etc.

In addition, locations of the first light sensor element 11 and the second light sensor element 12 with respect to the display 2 may be further disclosed. Referring to FIG. 2, the first light sensor element 11 and the second light sensor element 12 may be provided inside a housing of the camera 1. Both the first light sensor element and the second light sensor element may be located coplanar in an installation plane. The installation plane may parallel the display 2. The first light sensor element 11 and the second light sensor element 12 may be provided side by side in the installation plane. That is, the first light sensor element 11 and the second light sensor element 12 may be provided horizontally, side by side inside the housing of the camera 1. Photosensitive surfaces of both light sensor elements may face the display 2, and parallel the display 2. Herein the first light sensor element 11 and the second light sensor element 12 may be provided in such a way as to ensure that the first light sensor element 11 and the second light sensor element 12 receive as much ambient light as possible, and to ensure that the first light sensor element 11 and the second light sensor element 12 are under identical light, lowering a difference in a light sensing mode rendered by how the first light sensor element 11 and the second light sensor element 12 are provided.

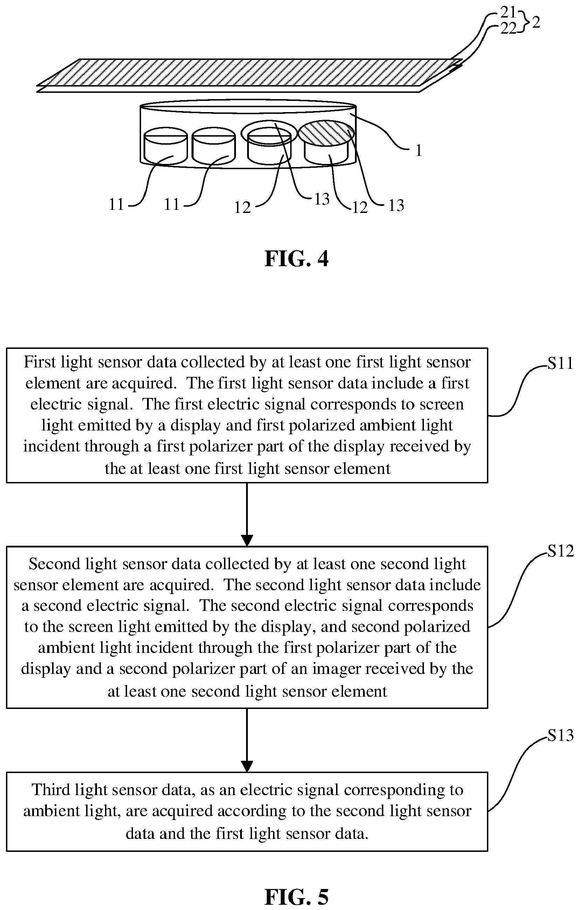

As shown in FIG. 4, an imager may include two first light sensor elements 11 and two second light sensor elements 12 provided coplanar in an installation plane. The installation plane may parallel the display 2. The two first light sensor elements 11 and the two second light sensor elements 12 may be provided side by side in the installation plane. That is, the two first light sensor elements 11 and the two second light sensor elements 12 may be provided horizontally, side by side inside the housing of the camera 1. Photosensitive surfaces of the four light sensor elements may all face the display 2, and parallel the display 2. Compared to provision of but one first light sensor element 11 and one second light sensor element 12, provision of two first light sensor elements 11 and two second light sensor elements 12 may provide more references, improving reliability of a solution herein. In case one of the two first light sensor elements 11 fails, the other first light sensor element 11 may still be available, avoiding malfunction of the imager in case only one first light sensor element 11 is provided and is subsequently broken. When two first light sensor elements 11 and two second light sensor elements 12 are provided, processing such as weighted average, average, etc., may be performed on a collected signal, increasing accuracy of acquired ambient light. Note that two second light sensor elements 12 may each correspond to a second polarizer part 13. That is, the imager may have two second polarizer parts 13. Each second light sensor element 12 may be glued to a second polarizer part 13. Alternatively, two second light sensor elements 12 may share one second polarizer part 13. The two second light sensor elements 12 may be glued respectively to the one second polarizer part 13. Like an aforementioned embodiment, herein the four light sensor elements may be of identical structures, functions, performance, etc., with details thereof not repeated. Understandably, there may be three, four, etc., first light sensor elements 11 and three, four, etc., second light sensor elements 12. A number of the first light sensor elements 11 may differ from that of the second light sensor elements 12. For example, 2 first light sensor elements 11 and 3 second light sensor elements 12 may be provided. A light sensor element may be provided on a side wall of the housing of the camera 1. That is, a photosensitive surface of the light sensor element may be perpendicular to the display. Any number of first light sensor element 11 and any number of second light sensor element 12 may be provided in any location as needed.

Embodiments herein further provide UE, such as a mobile phone, a pad, etc. The UE may have a first polarizer part, and the imager according to an aforementioned embodiment. The UE may further include a processor. The processor may be electrically connected respectively to the at least one first light sensor element and the at least one second light sensor element of the imager. The processor may be adapted to determining ambient light actually received by the light sensor elements by processing, using an algorithm, a signal collected by the at least one first light sensor element and the at least one second light sensor element of the imager, to ensure that a picture captured by the imager is clear and colorful.

As shown in FIG. 5, embodiments herein further provide a method for acquiring ambient light. The method may be applicable to an imager according to an embodiment in which polarization orientation of a first polarizer part is at a preset angle to polarization orientation of a second polarizer part. The method includes a step as follows.

In S11, first light sensor data collected by at least one first light sensor element are acquired. The first light sensor data include a first electric signal. The first electric signal corresponds to screen light emitted by a display and first polarized ambient light incident through a first polarizer part of the display received by the at least one first light sensor element.

In S12, second light sensor data collected by at least one second light sensor element are acquired. The second light sensor data include a second electric signal. The second electric signal corresponds to the screen light emitted by the display, and second polarized ambient light incident through the first polarizer part of the display and a second polarizer part of an imager received by the at least one second light sensor element.

In S 13, third light sensor data, as an electric signal corresponding to ambient light, are acquired according to the second light sensor data and the first light sensor data.

When there are more than one first light sensor element and one second light sensor element, first light sensor data and second light sensor data may be acquired by performing processing such as weighted average, average, etc., on an electric signal acquired by converting a light signal collected by the first light sensor elements and the second light sensor elements.

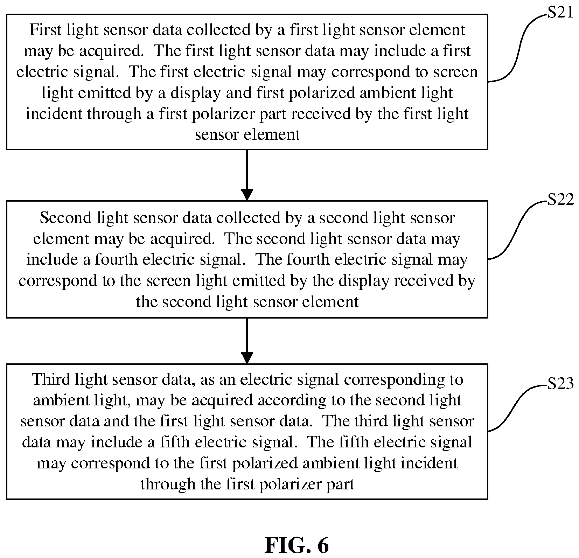

As shown in FIG. 6, embodiments herein provide a method for acquiring ambient light. The method may be applicable to an imager according to an embodiment in which polarization orientation of a first polarizer part is perpendicular to polarization orientation of a second polarizer part. The imager may contain only one first light sensor element and one second light sensor element. The method may include a step as follows.

In S21, first light sensor data collected by a first light sensor element may be acquired. The first light sensor data may include a first electric signal. The first electric signal may correspond to screen light emitted by a display and first polarized ambient light incident through a first polarizer part received by the first light sensor element.

In S22, second light sensor data collected by a second light sensor element may be acquired. The second light sensor data may include a fourth electric signal. The fourth electric signal may correspond to the screen light emitted by the display received by the second light sensor element.

In S23, third light sensor data, as an electric signal corresponding to ambient light, may be acquired according to the second light sensor data and the first light sensor data. The third light sensor data may include a fifth electric signal. The fifth electric signal may correspond to the first polarized ambient light incident through the first polarizer part.

In S23, the third light sensor data, as the electric signal corresponding to the ambient light, may be acquired according to the second light sensor data and the first light sensor data according to a signal processing mode in existing art. For example, any person having ordinary skill in the art may know that a display may be refreshed at a refresh rate, such as 60 times per second. The display may go black briefly during a refresh interval between any two neighboring refreshes, in which case the display may emit no screen light. That is, during a refresh interval, a first light sensor element herein may receive pure ambient light, and a second light sensor element herein may receive no light. In such a case, the third light sensor data may include the fifth electric signal corresponding to the first polarized ambient light incident through the first polarizer part, which may be taken as the electric signal corresponding to the ambient light applicable to subsequent image processing.

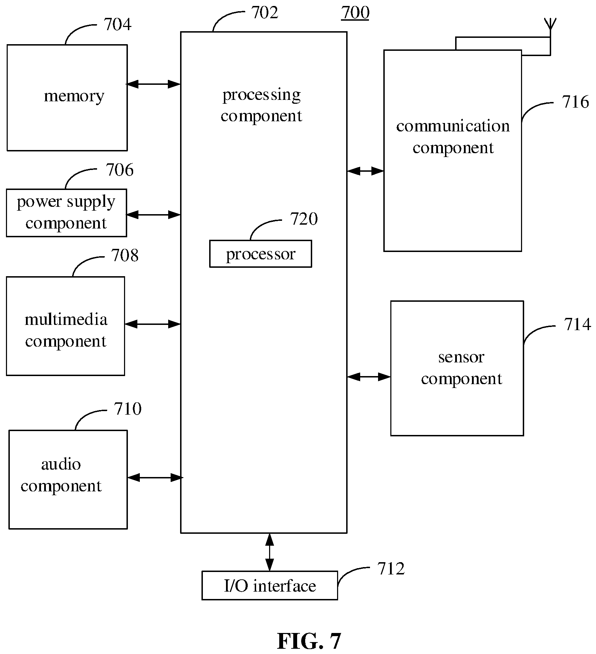

FIG. 7 is a block diagram of a device 700 for acquiring ambient light according to an exemplary embodiment. For example, the device 700 may be a mobile phone, a computer, digital broadcast UE, messaging equipment, a gaming console, tablet equipment, medical equipment, fitness equipment, a personal digital assistant, etc.

Referring to FIG. 7, the device 700 may include at least one of a processing component 702, memory 704, a power supply component 706, a multimedia component 708, an audio component 710, an Input / Output (I / O) interface 712, a sensor component 714, a communication component 716, etc.

The processing component 702 may generally control an overall operation of the device 700, such as operations associated with display, a telephone call, data communication, a camera operation, a recording operation, etc. The processing component 702 may include one or more processors 720 to execute instructions so as to complete all or a part of an aforementioned method. In addition, the processing component 702 may include one or more modules to facilitate interaction between the processing component 702 and other components. For example, the processing component 702 may include a multimedia portion to facilitate interaction between the multimedia component 708 and the processing component 702.

The memory 704 may be adapted to storing various types of data to support the operation at the device 700. Examples of such data may include instructions of any application or method adapted to operating on the device 700, contact data, phonebook data, messages, pictures, videos, etc. The memory 704 may be realized by any type of transitory or non-transitory storage equipment or a combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, a magnetic disk, a compact disk, etc.

The power supply component 706 may supply electric power to various components of the device 700. The power supply component 706 may include a power management system, one or more power sources, and other components related to generating, managing, and distributing electricity for the device 700.

The multimedia component 708 may include a screen that provides an output interface between the device 700 and a user. The screen may include a Liquid Crystal Display (LCD), a Touch Panel (TP), etc. If the screen includes a TP, the screen may be realized as a touch screen to receive a signal input by a user. The TP may include one or more touch sensors for sensing touch, slide, and gestures on the TP. The one or more touch sensors not only may sense the boundary of a touch or slide move, but also detect the duration and pressure related to the touch or slide move. The multimedia component 708 may include at least one of a front camera or a rear camera. When the device 700 is in an operation mode such as a photographing mode or a video mode, at least one of the front camera or the rear camera may receive external multimedia data. Each of the front camera or the rear camera may be a fixed optical lens system or may have a focal length and be capable of optical zooming.

The audio component 710 may be adapted to outputting and / or inputting an audio signal. For example, the audio component 710 may include a microphone (MIC). When the device 700 is in an operation mode such as a call mode, a recording mode, a voice recognition mode, etc., the MIC may be adapted to receiving an external audio signal. The received audio signal may be further stored in the memory 704 or may be sent via the communication component 716. The audio component 710 may further include a loudspeaker adapted to outputting the audio signal.

The I/O interface 712 may provide an interface between the processing component 702 and a peripheral interface portion. Such a peripheral interface portion may be a keypad, a click wheel, a button, etc. Such a button may include but is not limited to at least one of a homepage button, a volume button, a start button, or a lock button.

The sensor component 714 may include one or more sensors for assessing various states of the device 700. For example, the sensor component 714 may detect an on/off state of the device 700 and relative positioning of components such as the display and the keypad of the device 700. The sensor component 714 may further detect a change in the position of the device 700 or of a component of the device 700, whether there is contact between the device 700 and a user, the orientation or acceleration / deceleration of the device 700, a change in the temperature of the device 700, etc. The sensor component 714 may include a proximity sensor adapted to detecting existence of a nearby object without physical contact. The sensor component 714 may further include an optical sensor such as a Complementary Metal-Oxide-Semiconductor (CMOS) or a Charge-Coupled-Device (CCD) image sensor used in an imaging application. The sensor component 714 may further include an acceleration sensor, a gyroscope sensor, a magnetic sensor, a pressure sensor, a temperature sensor, etc.

The communication component 716 may be adapted to facilitating wired or wireless communication between the device 700 and other equipment. The device 700 may access a wireless network based on a communication standard such as Wi-Fi, 2G, 3G..., or a combination thereof. The communication component 716 may broadcast related information or receive a broadcast signal from an external broadcast management system via a broadcast channel. The communication component 716 may include a Near Field Communication (NFC) module for short-range communication. For example, the NFC module may be based on technology such as Radio Frequency Identification (RFID), Infrared Data Association (IrDA), Ultra-Wideband (UWB) technology, Bluetooth (BT), etc.

In an exemplary embodiment, the device 700 may be realized by one or more electronic components such as an Application Specific Integrated Circuit (ASIC), a Digital Signal Processor (DSP), a Digital Signal Processing Device (DSPD), a Programmable Logic Device (PLD), a Field Programmable Gate Array (FPGA), a controller, a microcontroller, a microprocessor, etc., to implement the method.

In an exemplary embodiment, a computer-readable storage medium including instructions, such as memory 704 including instructions, may be provided. The instructions may be executed by the processor 720 of the device 700 to implement an aforementioned method. For example, the computer-readable storage medium may be Read-Only Memory (ROM), Random Access Memory (RAM), Compact Disc Read-Only Memory (CD-ROM), a magnetic tape, a floppy disk, optical data storage equipment, etc.

A computer-readable storage medium has stored thereon instructions which, when executed by a processor of mobile UE, allow the mobile UE to implement a method for acquiring ambient light. The method includes:
acquiring first light sensor data collected by at least one first light sensor element, the first light sensor data comprising a first electric signal, the first electric signal corresponding to screen light emitted by a display and first polarized ambient light incident through a first polarizer part of the display received by the at least one first light sensor element;
acquiring second light sensor data collected by at least one second light sensor element, the second light sensor data comprising a second electric signal, the second electric signal corresponding to the screen light emitted by the display, and second polarized ambient light incident through the first polarizer part of the display and a second polarizer part of an imager received by the at least one second light sensor element; and
acquiring, according to the second light sensor data and the first light sensor data, third light sensor data as an electric signal corresponding to ambient light.

Other implementations of the subject disclosure will be apparent to a person having ordinary skill in the art that has considered the specification and or practiced the subject disclosure. The subject disclosure is intended to cover any variation, use, or adaptation of the subject disclosure following the general principles of the subject disclosure and including such departures from the subject disclosure as come within common knowledge or customary practice in the art. The specification and the embodiments are intended to be exemplary only, with a true scope of the subject disclosure being indicated by the appended claims.

Note that the subject disclosure is not limited to the exact construction that has been described above and illustrated in the accompanying drawings, and that various modifications and changes can be made to the subject disclosure without departing from the scope of the subject disclosure. It is intended that the scope of the subject disclosure is limited only by the appended claims.

## Claims

1. An imager, installed under a display (2) having a first polarizer part (21),
the imager comprising at least one first light sensor element (11) and at least one second light sensor element (12),
a second polarizer part (13) provided upstream of the at least one second light sensor element (12) along a direction in which light is incident on the at least one second light sensor element (12),
wherein polarization orientation of the first polarizer part (21) is at a preset angle to polarization orientation of the second polarizer part (13),
wherein the at least one first light sensor element (11) receives screen light emitted by the display (2) and first polarized ambient light incident through the first polarizer part (21),
wherein the at least one second light sensor element (12) receives the screen light emitted by the display (2) and second polarized ambient light incident through the first polarizer part (21) and the second polarizer part (13).

2. The imager of claim 1,
wherein the polarization orientation of the first polarizer part (21) is perpendicular to the polarization orientation of the second polarizer part (13),
wherein the at least one first light sensor element (11) receives the screen light emitted by the display (2) and the first polarized ambient light incident through the first polarizer part (21), and
wherein the at least one second light sensor element (12) receives the screen light emitted by the display (2).

3. The imager of any one of the previous claims,
wherein the first polarizer part (21) comprises a first polarizer,
wherein the second polarizer part (13) comprises a second polarizer,
wherein the first polarizer parallels the second polarizer.

4. The imager of any one of the previous claims,
wherein in an installed state, the at least one first light sensor element (11) and the at least one second light sensor element (12) are located coplanar in an installation plane,
wherein the installation plane parallels the display (2),
wherein the at least one first light sensor element (11) and the at least one second light sensor element (12) are provided side by side in the installation plane.

5. The imager of any one of the previous claims, comprising a camera (1).

6. The imager of any one of the previous claims, wherein the second polarizer part (13) is glued to the at least one second light sensor element (12).

7. User Equipment, UE (700), comprising an imager of any one of the previous claims, a display (2), and
a processor (720),
wherein the processor (720) is electrically connected respectively to the at least one first light sensor element (11) and the at least one second light sensor element (12) of the imager.

8. The UE (700) of claim 7, further comprising memory (704),
wherein the memory (704) is adapted to storing an instruction executable by the processor (720), and
wherein the processor (720) is adapted to:
acquiring first light sensor data collected by at least one first light sensor element (11), the first light sensor data comprising a first electric signal, the first electric signal corresponding to screen light emitted by a display (2) and first polarized ambient light incident through a first polarizer part (21) of the display (2) received by the at least one first light sensor element (11);
acquiring second light sensor data collected by at least one second light sensor element (12), the second light sensor data comprising a second electric signal, the second electric signal corresponding to the screen light emitted by the display (2), and second polarized ambient light incident through the first polarizer part (21) of the display (2) and a second polarizer part (13) of an imager received by the at least one second light sensor element (12); and
acquiring, according to the second light sensor data and the first light sensor data, third light sensor data as an electric signal corresponding to ambient light.

9. A method for acquiring ambient light, comprising:
acquiring (S11, S21) first light sensor data collected by at least one first light sensor element (11), the first light sensor data comprising a first electric signal, the first electric signal corresponding to screen light emitted by a display (2) and first polarized ambient light incident through a first polarizer part (21) of the display (2) received by the at least one first light sensor element (11);
acquiring (S12, S22) second light sensor data collected by at least one second light sensor element (12), the second light sensor data comprising a second electric signal, the second electric signal corresponding to the screen light emitted by the display (2), and second polarized ambient light incident through the first polarizer part (21) of the display (2) and a second polarizer part (13) of an imager received by the at least one second light sensor element (12); and
acquiring (S13, S23), according to the second light sensor data and the first light sensor data, third light sensor data as an electric signal corresponding to ambient light.

10. The method of claim 9, wherein when polarization orientation of the first polarizer part (21) is perpendicular to polarization orientation of the second polarizer part (13), the first light sensor data comprise the first electric signal, wherein the first electric signal corresponds to the screen light emitted by the display (2) and the first polarized ambient light incident through the first polarizer part (21) received by the at least one first light sensor element (11), wherein the second light sensor data comprise a fourth electric signal, wherein the fourth electric signal corresponds to the screen light emitted by the display (2) received by the at least one second light sensor element (12), wherein the third light sensor data comprise a fifth electric signal, wherein the fifth electric signal corresponds to the first polarized ambient light incident through the first polarizer part (21).

11. A computer-readable storage medium, having stored thereon instructions which, when executed by a processor (720) of mobile User Equipment, UE, allow the mobile UE to implement the method of any one of claims 9 to 10.
